# EUROPÄISCHE PATENTSCHRIFT

(11) **EP 3 390 177 B1**
(45) Veröffentlichungstag und Bekanntmachung des Hinweises auf die Patenterteilung: **13.04.2022**
(21) Anmeldenummer: 16798624.9
(22) Anmeldetag: 07.11.2016
(51) Int. Cl.: B60T 8/36, B60T 13/68

(54) **VENTILEINHEIT ZUR DRUCKMODULATION IN EINER DRUCKLUFT-BREMSANLAGE**
VALVE UNIT FOR MODULATING THE PRESSURE IN A PNEUMATIC BRAKE SYSTEM
UNITÉ SOUPAPE POUR LA MODULATION DE PRESSION DANS UN SYSTÈME DE FREINAGE À AIR COMPRIMÉ

(30) Priorität: 15.12.2015 DE 102015016264
(43) Veröffentlichungstag der Anmeldung: 24.10.2018
(73) Patentinhaber: ZF CV Systems Europe BV, 1170 Brussels (BE)
(72) Erfinder: BIALON, Rafal, 55-200 Olawa (PL); TEICHMANN, Andreas, 30916 Isernhagen (DE); WASSMANN, Alexander, 31555 Suthfeld (DE)
(74) Vertreter: Koschnitzki, Thomas
(86) Internationale Anmeldenummer: PCT/EP2016/001840
(87) Internationale Veröffentlichungsnummer: WO 2017/102044

(56) Entgegenhaltungen:
- DE-A1-102013 015 830
- JP-A- H0 840 253
- US-B2- 8 672 421

## Beschreibung

Die Erfindung betrifft eine Ventileinheit zur Druckmodulation in einer Druckluft-Bremsanlage, mit einem Einlassventil und einem Auslassventil, die als Membranventile ausgebildet sind, und über die ein Bremsdruckausgang mit einem Bremsdruckeingang oder einem Entlüftungsausgang verbindbar oder gegenüber diesem absperrbar ist, und mit zwei als 3/2-Wege-Magnetventile ausgebildeten Vorsteuerventilen, über die jeweils eine an die Membran des zugeordneten Membranventils angrenzende Steuerkammer über eine Steuerdruckleitung mit einem Steuerdruck beaufschlagbar ist, wobei die beiden Membranventile mit parallelen Betätigungsachsen radial benachbart in einem Ventilgehäuse angeordnet sind, und bei dem die Membranen der Membranventile zwischen zwei Gehäuseteilen eingespannt sind.

In Druckluft-Bremsanlagen von Radfahrzeugen, wie Kraftfahrzeugen und Schienenfahrzeugen, können Ventileinheiten der genannten Bauart als Bremsventil, als Relaisventil und als ABS-Regelventil verwendet werden. Eine derartige Ventileinheit weist ein Einlassventil und ein Auslassventil auf. Mit dem Einlassventil ist ein Bremsdruckausgang, an dem ein Bremskreis oder eine zu einem Radbremszylinder führende Bremsleitung angeschlossen sein kann, wechselweise mit einem Bremsdruckeingang, an dem ein von einem Bremsventil oder einem Relaisventil kommende Bremsleitung angeschlossen sein kann, verbindbar oder gegenüber diesem absperrbar. Mit dem Auslassventil ist der Bremsdruckausgang wechselweise mit einem Entlüftungsausgang, der üblicherweise über einen Schalldämpfer in die Umgebung führt, verbindbar oder gegenüber diesem absperrbar.

Aufgrund großer zu schaltender Volumenströme und entsprechend großer zu öffnender sowie zu schließender Strömungsquerschnitte sind das Einlassventil und das Auslassventil häufig als pneumatisch betätigbare Membranventile ausgebildet, welche über jeweils ein als 3/2-Wege-Magnetventil ausgebildetes Vorsteuerventil ansteuerbar sind. Ein Membranventil weist eine weitgehend kreisscheibenförmige flexible Membran auf, die an ihrem radialen Rand in einem Ventilgehäuse eingespannt ist. Auf der axialen Innenseite der Membran, auf welcher die mit den Drucklufteingängen und Druckluftausgängen verbundenen Strömungskanäle angeordnet sind, sind koaxial zu der Betätigungsachse des jeweiligen Membranventils ein zylindrischer Zentralkanal mit einem der Membran zugewandten kreisrunden Ventilsitz sowie konzentrisch dazu ein äußerer Ringkanal angeordnet. Auf der axial gegenüberliegenden Außenseite der Membran ist eine Steuerkammer angeordnet, welche durch das zugeordnete Vorsteuerventil wechselweise mit einem üblicherweise am Bremsdruckeingang entnommenen hohen Steuerdruck oder mit einem am Entlüftungsausgang oder an anderer Stelle entnommenen, üblicherweise dem Umgebungsdruck entsprechenden niedrigen Steuerdruck beaufschlagbar ist.

Bei einer Beaufschlagung der Steuerkammer mit dem hohen Steuerdruck wird die Membran gegen den Ventilsitz gedrückt, wodurch der Zentralkanal gegenüber dem radial äußeren Ringkanal abgesperrt wird, was dem geschlossenen Zustand des betreffenden Membranventils entspricht. Bei einer Beaufschlagung der Steuerkammer mit dem niedrigen Steuerdruck wird die durch deren Formgebung und/oder durch eine Ventilfeder selbsttätig an dem Ventilsitz anliegende Membran durch den in den Strömungskanälen herrschenden Bremsdruck von dem Ventilsitz abgehoben und in Richtung zu der Steuerkammer verschoben, wodurch der Zentralkanal mit dem Ringkanal verbunden wird, welches dem geöffneten Zustand des betreffenden Membranventils entspricht.

Hinsichtlich der geometrischen Anordnung der Drucklufteingänge und Druckluftausgänge, der als Membranventile ausgebildeten Einlassventile und Auslassventile, sowie der als Magnetventile ausgebildeten Vorsteuerventile in einem Ventilgehäuse sind Ausführungen von Ventileinheiten bekannt, bei denen die Drucklufteingänge und Druckluftausgänge sowie die Membranventile mit parallelen Betätigungsachsen in einem ersten Gehäuseteil angeordnet sind, die Vorsteuerventile in einem zweiten Gehäuseteil angeordnet sind, und die Membranen der Membranventile zwischen den beiden Gehäuseteilen eingespannt sind.

Eine derartige Ventileinheit ist beispielsweise in der US 3,977,734 A beschrieben. Bei dieser bekannten Ventileinheit ist ein Ventilgehäuse mit einer in Einbaulage horizontalen Teilungsebene in ein Gehäuseunterteil und ein Gehäuseoberteil unterteilt. Der Bremsdruckeingang, der Bremsdruckausgang und der Entlüftungsausgang sind in dem Gehäuseunterteil angeordnet. Die Vorsteuerventile sind mit parallel zueinander und senkrecht zu der Teilungsebene ausgerichteten Betätigungsachsen in dem Gehäuseoberteil angeordnet. Die Membranventile sind mit parallelen Betätigungsachsen in dem Gehäuseunterteil angeordnet, wobei die Membranen in einer gemeinsamen, weitgehend der Teilungsebene entsprechenden Membranebene zwischen dem Gehäuseunterteil und dem Gehäuseoberteil eingespannt sind.

Bei einer weiteren derartigen, aus der EP 0 498 584 B1 bekannten Ventileinheit ist das Ventilgehäuse mit einer in Einbaulage vertikalen Teilungsebene in ein Eingangsgehäuse und ein Ausgangsgehäuse unterteilt. Der Bremsdruckeingang ist zwar in dem Eingangsgehäuse angeordnet, jedoch über einen Verbindungskanal unmittelbar mit einem in dem Ausgangsgehäuse befindlichen Eingangskanal verbunden. Der Bremsdruckausgang und der Entlüftungsausgang sind unmittelbar in dem Ausgangsgehäuse angeordnet. Die Vorsteuerventile sind mit parallelen Betätigungsachsen in einem Ventilblock zusammengefasst, der abgedichtet in eine Ausnehmung des Eingangsgehäuses eingesetzt ist. Die Membranventile sind mit parallelen Betätigungsachsen in dem Ausgangsgehäuse angeordnet, wobei die Membranen in einer gemeinsamen, weitgehend der Teilungsebene entsprechenden Membranebene zwischen dem Eingangsgehäuse und dem Ausgangsgehäuse eingespannt sind.

Schließlich ist in der US 8,672,421 B2 eine Ventileinheit beschrieben, bei der ein Ventilgehäuse mit in Einbaulage weitgehend horizontalen Teilungsebenen in ein Gehäuseunterteil, ein Gehäuseoberteil und eine dazwischen angeordnete Zwischenplatte unterteilt ist. Der Bremsdruckeingang, der Bremsdruckausgang und der Entlüftungsausgang sind in dem Gehäuseunterteil angeordnet. Die Vorsteuerventile sind mit parallel zueinander und senkrecht zu der Teilungsebene zwischen der Zwischenplatte und dem Gehäuseoberteil ausgerichteten Betätigungsachsen sowie mit gleicher Betätigungsrichtung in Reinschrift
dem Gehäuseoberteil angeordnet, wobei die Ventilsitze Bestandteile der Zwischenplatte sind. Die Membranventile sind mit parallelen Betätigungsachsen in dem Gehäuseunterteil angeordnet, wobei die Membranen in einer gemeinsamen, weitgehend der Teilungsebene zwischen dem Gehäuseunterteil und der Zwischenplatte entsprechenden Membranebene zwischen dem Gehäuseunterteil und der Zwischenplatte eingespannt sind.

Eine weitere Ventileinrichtung für eine druckbetätigte Anlage ist aus der DE 10 2013 015 830 A1 bekannt.

Die Membranventile der bekannten Ventileinheiten weisen jeweils eine zwischen der Membran und der Innenwand der betreffenden Steuerkammer beziehungsweise einem dort eingearbeiteten Federsitz angeordnete Ventilfeder auf, durch welche die Membran im drucklosen Zustand an den Ventilsitz angedrückt wird und so ein schnelles Schließen des Membranventils möglich ist. Nachteilig verursachen die Ventilfedern aber eine Basisschließkraft, welche das Öffnen der Membranventile verzögert. Zudem können die Ventilfedern bei der Montage der Ventileinheit auch vergessen oder falsch montiert werden, ohne dass dies bei einer Funktionsprüfung, die üblicherweise nach Abschluss der Montage im Rahmen einer Qualitätskontrolle durchgeführt wird, festgestellt werden kann.

Der vorliegenden Erfindung liegt daher die Aufgabe zugrunde, eine Ventileinheit der eingangs genannten Bauart vorzuschlagen, die ein verbessertes Ansprechverhalten der Membranventile aufweist, und bei der bauartbedingte Montagefehler vermieden werden können.

Diese Aufgabe wird durch eine Ventileinheit mit den Merkmalen des Anspruchs 1 gelöst. Vorteilhafte Weiterbildungen dieser Ventileinheit sind in den Unteransprüchen definiert.

Die Erfindung betrifft demnach eine Ventileinheit zur Druckmodulation in einer Druckluft-Bremsanlage, mit einem Einlassventil und einem Auslassventil, die als Membranventile ausgebildet sind, und über die ein Bremsdruckausgang mit einem Bremsdruckeingang oder einem Entlüftungsausgang verbindbar oder gegenüber diesem absperrbar ist, und mit zwei als 3/2-Wege-Magnetventile ausgebildeten Vorsteuerventilen, über die jeweils eine an die Membran des zugeordneten Membranventils angrenzende Steuerkammer über eine Steuerdruckleitung mit einem Steuerdruck beaufschlagbar ist, wobei die Membranventile mit parallelen Betätigungsachsen radial benachbart in einem Ventilgehäuse angeordnet sind, und die Membranen der Membranventile zwischen zwei Gehäuseteilen eingespannt sind. Weiter ist bei dieser Ventileinheit vorgesehen, dass das Einlassventil und/oder das Auslassventil jeweils als ein federloses Membranventil ausgebildet ist, und dass die zugeordnete Steuerdruckleitung jeweils mittig und axial ausgerichtet in die Steuerkammer des betreffenden Membranventils einmündet.

Anstelle einer Ventilfeder, durch welche die Membran im drucklosen Zustand an den Ventilsitz angedrückt und somit ein schnelles druckdichtes Schließen des betreffenden Membranventils ermöglicht wird, wird die jeweilige Membran nun im drucklosen Zustand nur durch ihre Formgebung an dem Ventilsitz gehalten. Wenn die betreffende Steuerkammer aber zum druckdichten Schließen des Membranventils über das zugeordnete Vorsteuerventil mit dem hohen Steuerdruck beaufschlagt wird, strömt die betreffende Steuerdruckluft aufgrund der mittig und axial ausgerichteten Einmündung der Steuerdruckleitung dem Ventilsitz genau gegenüberliegend in die Steuerkammer ein. Hierdurch wird die Membran sowohl durch den hohen statischen Druck als auch durch den Staudruck der einströmenden Steuerdruckluft gegen den Ventilsitz gedrückt und damit das betreffende Membranventil schnell geschlossen. Umgekehrt strömt die Steuerdruckluft dann, wenn die betreffende Steuerkammer zum Öffnen des Membranventils über das zugeordnete Vorsteuerventil mit dem niedrigen Steuerdruck beaufschlagt wird, dem Ventilsitz genau gegenüberliegend wieder aus der Steuerkammer ab. Hierdurch wird die Membran durch den aufgrund des Venturieffektes unter den niedrigen Steuerdruck fallenden Druck der abströmenden Steuerdruckluft und den gegenüberliegend in den Strömungskanälen des Membranventils vorliegenden Bremdsdrücken von dem Ventilsitz abgehoben und damit das betreffende Membranventil schnell geöffnet. Im Vergleich zu einem mit einer Ventilfeder versehenen Membranventil wird somit eine geringere Schaltdauer beim Öffnen des Membranventils erreicht. Zudem werden durch die Einsparung der Ventilfedern Herstellungs- und Montagekosten der Ventileinheit eingespart und mögliche Montagefehler vermieden. Als positiver Nebeneffekt ergibt sich dadurch ohne eine Änderung der Hauptabmessungen auch eine Vergrößerung des wirksamen Volumens der Steuerkammern, da durch den Wegfall der Ventilfedern deren Volumen jeweils hinzukommt.

Um die Druckwirkung der in die Steuerkammer einströmenden und ausströmenden Steuerdruckluft zu verstärken, ist gemäß der Erfindung vorgesehen, dass die Steuerdruckleitung zur Bildung einer Düse-Prallplatte-Einheit über eine in die Steuerkammer des Membranventils axial hineinragende Rohrdüse endet. Durch den dadurch erzielten geringeren Abstand zwischen dem Außenrand der Rohrdüse und der Membran ist der auf die Membran wirkende Druck der einströmenden Steuerdruckluft größer und der ausströmenden Druckluft kleiner, so dass das betreffende Membranventil schneller geschlossen und geöffnet wird.

Bei mit Ventilfedern versehenen Membranventilen wird die Auslenkung der Membranen beim Öffnen der Membranventile üblicherweise durch die auf Block zusammengedrückte Ventilfedern begrenzt. Diese Möglichkeit steht durch den Wegfall der Ventilfedern nun nicht mehr zur Verfügung. Es ist gemäß einer anderen Ausführungsform daher vorgesehen, dass die Rohrdüse der Steuerdruckleitung so weit in die Steuerkammer des Membranventils hineinragt, dass deren axialer Außenrand beim Öffnen des Membranventils als eine Anschlagfläche für die Membran wirksam ist.

Damit die Membran beim Anliegen am Außenrand der Rohrdüse durch diesen nicht beschädigt wird, ist der Außenrand der Rohrdüse zur Reduzierung der Flächenpressung der Membran vorteilhaft als eine ebene Ringfläche ausgebildet.

Beim Ausströmen der Steuerdruckluft aus der Steuerkammer kann die Membran am Außenrand der Rohrdüse festgesaugt werden, wodurch das vollständige Abströmen der Steuerdruckluft und damit das vollständige Öffnen des betreffenden Membranventils verhindert würde. Daher ist bevorzugt vorgesehen, dass der Außenrand der Rohrdüse zur Vermeidung eines Festsaugens der Membran mit mindestens einer Ausnehmung versehen ist. Die Ausnehmung in dem Außenrand der Rohrdüse ist vorzugsweise als eine im Querschnitt halbrunde Diagonalnut ausgebildet, da eine derartige Ausführung einfach herstellbar ist.

Zur Wirkverstärkung der Düse-Prallplatte-Einheit kann die Membran einen in die Steuerkammer axial hineinragenden zylindrischen Ringsteg aufweisen, dessen Innendurchmesser größer ist als der Außendurchmesser der Rohrdüse der Steuerdruckleitung. Durch den Ringsteg der Membran wird die Wirkung der Düse-Prallplatte-Einheit besonders verstärkt, wenn der Außenrand des Ringsteges bei geschlossener Membran den Außenrand der Rohrdüse axial in Richtung der Innenwand der Steuerkammer überragt, da die einströmende und ausströmende Steuerdruckluft dann um ca. 180° um den Außenrand der Rohrdüse umgelenkt wird.

Der Ringsteg der Membran kann auch so weit in die Steuerkammer hineinragen, dass alternativ zu dem Außenrand der Rohrdüse die axial gegenüberliegende Innenwand der Steuerkammer im Zusammenwirken mit dem Außenrand des Ringsteges beim Öffnen des Membranventils als Anschlagfläche für die Membran wirksam ist.

Damit die Membran beim Anliegen des Ringsteges an der Innenwand der Steuerkammer nicht beschädigt wird, ist der Außenrand des Ringsteges zur Reduzierung der Flächenpressung beim Anliegen an der Innenwand der Steuerkammer zweckmäßig als eine ebene Ringfläche ausgebildet.

Bei dieser Ausführungsform der Membran kann diese beim Abströmen der Steuerdruckluft aus der Steuerkammer mit dem Außenrand des Ringsteges an der Innenwand der Steuerkammer festgesaugt werden, wodurch das vollständige Abströmen der Steuerdruckluft und damit das vollständige Öffnen des betreffenden Membranventils verhindert würde. Daher ist bevorzugt vorgesehen, dass der Außenrand des Ringsteges zur Vermeidung eines Festsaugens der Membran an der Innenwand der Steuerkammer mit mindestens einer Ausnehmung versehen ist.

Die Ausnehmung in dem Außenrand des Ringsteges ist vorzugsweise als eine im Querschnitt halbrunde Diagonalnut ausgebildet, da eine derartige Ausführung einfach herstellbar ist und eine geringe Kerbwirkung mit einer geringen Neigung zur Rissbildung aufweist.

Zur weiteren Verdeutlichung der Erfindung ist der Beschreibung eine Zeichnung mit zwei Ausführungsbeispielen beigefügt. In dieser zeigt
Fig. 1 eine erste Ausführungsform der erfindungsgemäßen Ventileinheit in einem vertikalen Längsschnitt,
Fig. 1a die Ventileinheit gemäß Fig. 1 in einem vergrößerten Ausschnitt,
Fig. 1b ein Detail der ersten Ausführungsform der Ventileinheit gemäß den Figuren 1 und 1a in einer ausschnittweisen Axialansicht,
Fig. 2 eine zweite Ausführungsform einer erfindungsgemäßen Ventileinheit in einem vertikalen Längsschnitt,
Fig. 2a die zweite Ausführungsform der Ventileinheit gemäß Fig. 2 in einem vergrößerten Ausschnitt, und
Fig. 2b ein Detail der zweiten Ausführungsform der Ventileinheit gemäß den Figuren 2 und 2a in einer ausschnittweisen Axialansicht.

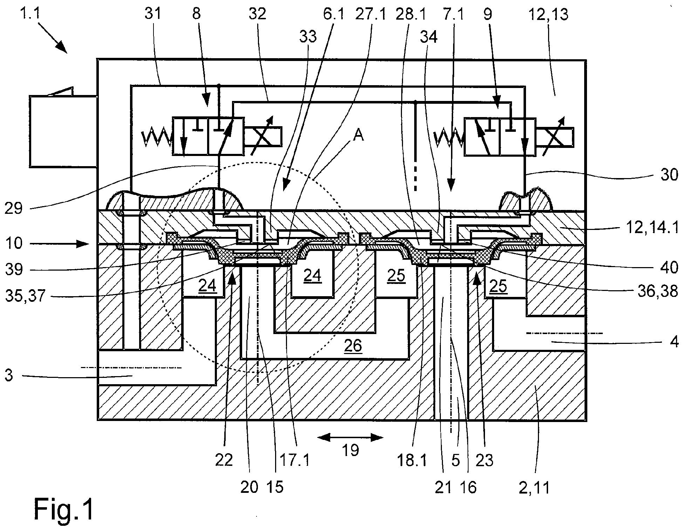

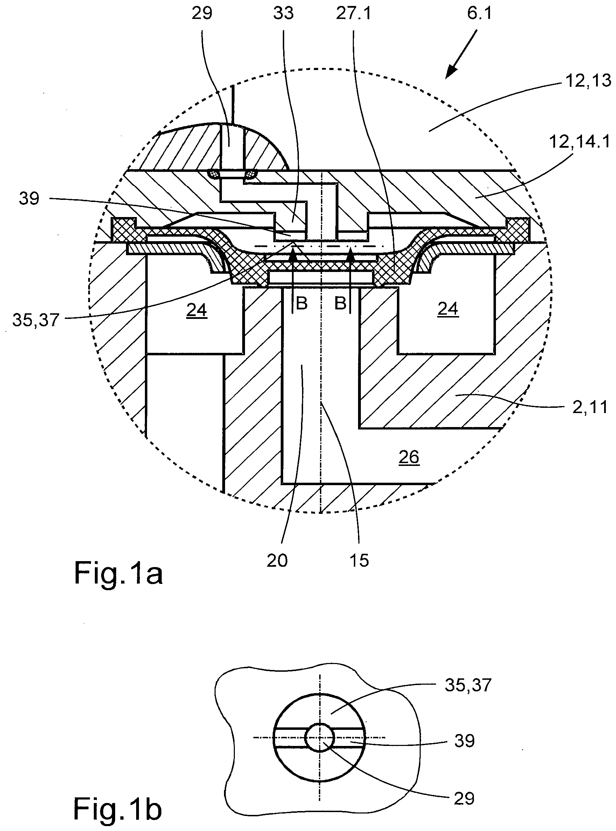

Demnach ist eine erste Ausführungsform einer Ventileinheit 1.1 mit den Merkmalen der Erfindung in Fig. 1 in einem vertikalen Längsschnitt abgebildet. In einem länglichen Ventilgehäuse 2 sind ein Bremsdruckeingang 3, ein Bremsdruckausgang 4, ein Entlüftungsausgang 5, ein als Membranventil ausgebildetes Einlassventil 6.1, ein als Membranventil ausgebildetes Auslassventil 7.1, und jeweils ein als 3/2-Wege-Magnetventil ausgebildetes Vorsteuerventil 8, 9 für jedes Membranventil 6.1, 7.1 angeordnet.

Das Ventilgehäuse 2 ist mit einer in Einbaulage weitgehend horizontalen Teilungsebene 10 in ein Basisgehäuse 11 und einen Gehäusedeckel 12 unterteilt. Der Gehäusedeckel 12 umfasst eine die Magnetventile 8, 9 enthaltende Steuereinheit 13 sowie eine zwischen dem Basisgehäuse 11 und der Steuereinheit 13 angeordnete Zwischenplatte 14.1. Die Steuereinheit 13 und die Zwischenplatte 14.1 können miteinander verschraubt, verrastet oder in anderer Weise fest miteinander verbunden sein. Der so gebildete Gehäusedeckel 12 kann einheitlich mit dem Basisgehäuse 11 verbunden, insbesondere verschraubt sein. Es ist jedoch auch möglich, dass die Steuereinheit 13 und die Zwischenplatte 14.1 separat mit dem Basisgehäuse verbunden sind.

Der Bremsdruckeingang 3 und der Bremsdruckausgang 4 sind in Längsrichtung 19 des Ventilgehäuses 2 gesehen mit horizontaler Ausrichtung weitgehend axial gegenüberliegend angeordnet, während der Entlüftungsausgang 5 dazwischen vertikal nach unten gerichtet in dem Basisgehäuse 11 angeordnet ist. Die beiden Membranventile 6.1, 7.1 sind in dem Basisgehäuse 11 zwischen dem Bremsdruckeingang 3 und dem Bremsdruckausgang 4 mit parallelen Betätigungsachsen 15, 16 sowie einer Anordnung der beiden Membranen 17.1, 18.1 in einer gemeinsamen, weitgehend der Teilungsebene 10 entsprechenden Membranebene unter Einspannung zwischen dem Basisgehäuse 11 und der Zwischenplatte 14.1 des Gehäusedeckels 12 in Längsrichtung 19 hintereinander angeordnet. Die in Fig. 1 nur schematisch dargestellten Vorsteuerventile 8, 9 sind vollständig in der Steuereinheit 13 des Gehäusedeckels 12 angeordnet.

Die beiden Membranventile 6.1, 7.1 weisen innerhalb des Basisgehäuses 11 koaxial zu den Betätigungsachsen 15, 16 jeweils einen zylindrischen Zentralkanal 20, 21 mit einem der Membran 17.1, 18.1 zugewandten kreisrunden Ventilsitz 22, 23 und einen konzentrisch dazu angeordneten radial äußeren Ringkanal 24, 25 auf. Der Ringkanal 24 des Einlassventils 6.1 ist unmittelbar mit dem Bremsdruckeingang 3 verbunden. Der Zentralkanal 20 des Einlassventils 6.1 steht über einen Verbindungskanal 26 mit dem Ringkanal 25 des Auslassventils 7.1 in Verbindung, der seinerseits unmittelbar mit dem Bremsdruckausgang 4 in Verbindung steht. Der Zentralkanal 21 des Auslassventils 7.1 ist unmittelbar mit dem Entlüftungsausgang 5 verbunden.

Auf der dem Gehäusedeckel 12 axial zugewandten Außenseite der beiden Membranen 17.1, 18.1 ist jeweils eine Steuerkammer 27.1, 28.1 angeordnet, in die jeweils eine Steuerdruckleitung 29, 30 einmündet. Über diese Steuerdruckleitungen 29, 30 sind die Steuerkammern 27.1, 28.1 der Membranventile 6.1, 7.1 durch das jeweils zugeordnete Vorsteuerventil 8, 9 wechselweise mit einem über eine Steuerdruckleitung 31 am Bremsdruckeingang 3 entnommenen hohen Steuerdruck oder mit einem über eine Steuerdruckleitung 32 am Entlüftungsausgang 5 oder an anderer Stelle entnommenen, dem Umgebungsdruck entsprechenden niedrigen Steuerdruck beaufschlagbar. Bei Beaufschlagung der jeweiligen Steuerkammer 27.1, 28.1 mit dem hohen Steuerdruck wird die betreffende Membran 17.1, 18.1 auf den zugeordneten Ventilsitz 22, 23 gedrückt, wodurch das betreffende Membranventil 6.1, 7.1 geschlossen ist. Bei Beaufschlagung der jeweiligen Steuerkammer 27.1, 28.1 mit dem niedrigen Steuerdruck kann die betreffende Membran 17.1, 18.1 durch den in den angrenzenden Strömungskanälen 20, 24; 21, 25 vorliegenden Bremsdruck von dem Ventilsitz 22, 23 weggedrückt werden, wodurch das betreffende Membranventil 6.1, 7.1 geöffnet ist.

Die Ventileinheit 1.1 weist die Schaltfunktionen "Druck erhöhen", "Druck halten" und "Druck absenken" auf. In der Schaltfunktion "Druck erhöhen" sind das Einlassventil 6.1 geöffnet und das Auslassventil 7.1 geschlossen, so dass der über ein Bremsventil oder ein Relaisventil an dem Bremsdruckeingang 3 eingesteuerte Bremsdruck unverändert an den Bremsdruckausgang 4 und an den daran angeschlossenen Bremskreis oder Radbremszylinder weitergeleitet wird. Da die Schaltfunktion "Druck erhöhen" dem Ruhezustand der Ventileinheit 1.1 entspricht, verbindet das Vorsteuerventil 8 des Einlassventils 6.1 im unbestromten Zustand seiner Magnetspule die Steuerkammer 27.1 des Einlassventils 6.1 mit der den niedrigen Steuerdruck führenden Steuerdruckleitung 32. Ebenso verbindet das Vorsteuerventil 9 des Auslassventils 7.1 im unbestromten Zustand seiner Magnetspule die Steuerkammer 28.1 des Auslassventils 7.1 mit der den hohen Steuerdruck führenden Steuerdruckleitung 31. In der Schaltfunktion "Druck halten" der Ventileinheit 1.1 sind das Einlassventil 6.1 und das Auslassventil 7.1 geschlossen, so dass der am Bremsdruckausgang 4 und dem daran angeschlossenen Bremskreis oder Radbremszylinder anliegende Bremsdruck konstant gehalten wird. Zur Einstellung dieser Schaltfunktion wird nur das Vorsteuerventil 8 des Einlassventils 6.1 durch Bestromung seiner Magnetspule umgeschaltet und damit die Steuerkammer 27.1 des Einlassventils 6.1 mit dem hohen Steuerdruck beaufschlagt.

In der Schaltfunktion "Druck absenken" der Ventileinheit 1.1 sind das Einlassventil 6.1 geschlossen und das Auslassventil 7.1 geöffnet, so dass der Bremsdruckausgang 4 und der daran angeschlossene Bremskreis oder Radbremszylinder dann über den Entlüftungsausgang 5 entlüftet werden. Zur Einstellung dieser Schaltfunktion werden beide Vorsteuerventile 8, 9 durch Bestromung ihrer Magnetspulen umgeschaltet und damit die Steuerkammer 27.1 des Einlassventils 6.1 mit dem hohen Steuerdruck sowie die Steuerkammer 28.1 des Auslassventils 7.1 mit dem niedrigen Steuerdruck beaufschlagt.

Die Schaltfunktionen "Druck halten" und "Druck absenken" der Ventileinheit 1.1 sind auch Blockierschutzfunktionen, mit denen bei einer Verwendung der Ventileinheit 1.1 als ABS-Regelventil ein bremsbedingtes Blockieren des zugeordneten Rades verhindert werden kann. Die Blockierschutzfunktionen werden durch eine entsprechende Ansteuerung der Vorsteuerventile von einem ABS-Steuergerät gesteuert, in dem die Signale von Raddrehzahlsensoren zur Erkennung eines bevorstehenden oder schon eingetretenen Blockierens der gebremsten Räder ausgewertet werden.

Erfindungsgemäß sind das Einlassventil 6.1 und das Auslassventil 7.1 jeweils als federlose Membranventile ausgebildet, und die zugeordnete Steuerdruckleitung 29, 30 mündet jeweils mittig und axial ausgerichtet in die Steuerkammer 27.1, 28.1 des betreffenden Membranventils 6.1, 7.1 ein. Bei einer Beaufschlagung der jeweiligen Steuerkammer 27.1, 28.1 mit dem hohen Steuerdruck wird die betreffende Membran 17.1, 18.1 durch den mittig auf diese gerichteten Strahl der Steuerdruckluft unmittelbar gegen den zugeordneten Ventilsitz 22, 23 gedrückt, wodurch das betreffende Membranventil 6.1, 7.1 schnell geschlossen wird. Andererseits wird bei einer Beaufschlagung der jeweiligen Steuerkammer 27.1, 28.1 mit dem niedrigen Steuerdruck das Abheben der betreffenden Membran 17.1, 18.1 von dem zugeordneten Ventilsitz 22, 23 durch die abströmende Steuerdruckluft durch den dabei entstehenden Unterdruck unterstützt, wodurch das betreffende Membranventil 6.1, 7.1 schnell geöffnet wird. Im Vergleich zu mit einer Ventilfeder versehenen Membranventilen wird dadurch eine geringere Schaltzeit beim Öffnen der Membranventile 6.1, 7.1 erreicht. Zudem werden durch den Wegfall der Ventilfedern die Herstellungs- und Montagekosten der Ventileinheit 1.1 gesenkt sowie mögliche Montagefehler vermieden.

Wie besonders gut in dem in Fig. 1a vergrößert abgebildeten Ausschnitt A aus Fig. 1 erkennbar ist, enden die Steuerdruckleitungen 29, 30 in der vorliegenden Ausführungsform der Membranventile 6.1, 7.1 zur Bildung einer Düse-Prallplatte-Einheit jeweils über eine in die Steuerkammer 27.1, 28.1 des Membranventils 6.1, 7.1 axial hineinragende Rohrdüse 33, 34. Die Rohrdüsen 33, 34 der Steuerdruckleitungen 29, 30 ragen jeweils so weit in die zugeordnete Steuerkammer 27.1, 28.1 hinein, dass deren Außenrand 35, 36 beim Öffnen des Membranventils 6.1, 7.1 als Anschlag für die jeweilige Membran 17.1, 18.1 wirksam ist. Zur Reduzierung der Flächenpressung beim Anliegen am Außenrand 35, 36 der jeweiligen Rohrdüse 33, 34 und damit zur Vermeidung einer Beschädigung der Membranen 17.1, 18.1 sind die Außenränder 35, 36 der Rohrdüsen 33, 34 jeweils als eine ebene Ringfläche 37, 38 ausgebildet.

Die in Fig. 1b abgebildete ausschnittweise Axialansicht mit Blickrichtung B gemäß Fig. 1a auf die Rohrdüse 33 verdeutlicht, dass der Außenrand 35, 36 der Rohrdüsen 33, 34 zur Vermeidung eines Festsaugens der Membran 17.1, 18.1 an der betreffenden Rohrdüse 33, 34 jeweils mit einer Ausnehmung 39, 40 versehen ist, die vorliegend als eine im Querschnitt halbrunde Diagonalnut ausgebildet ist.

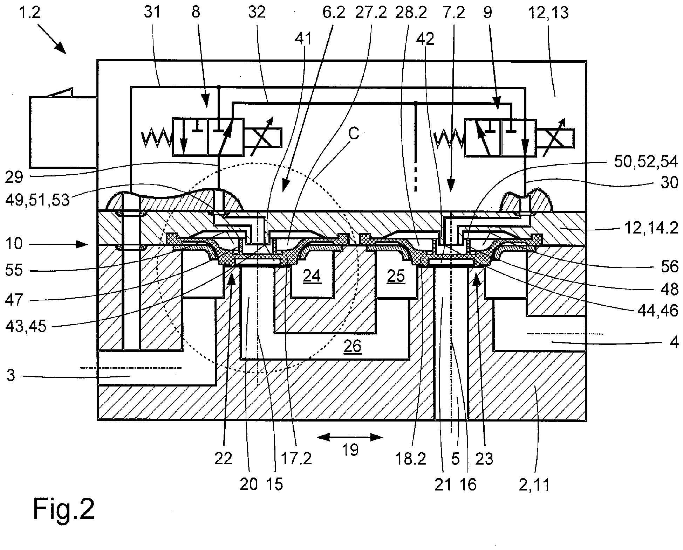

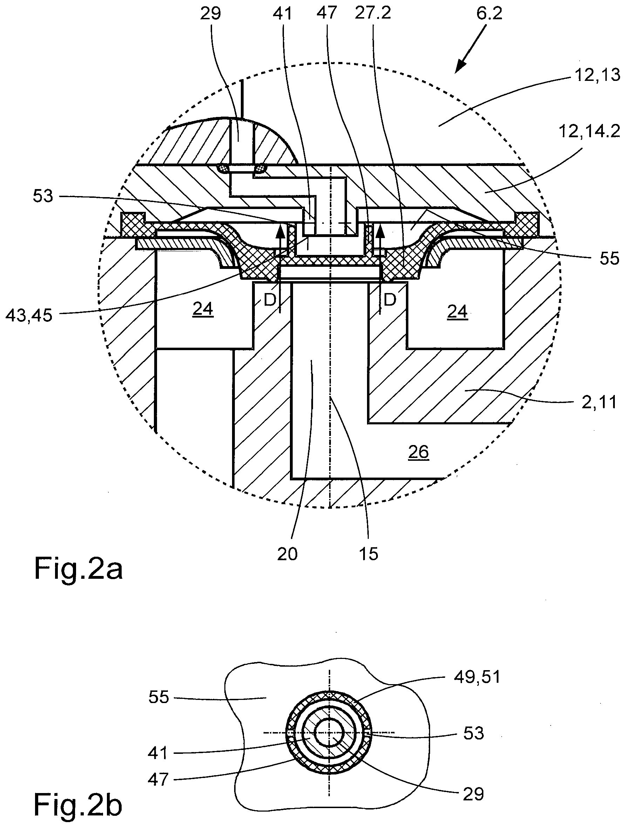

Eine in Fig. 2 in einem vertikalen Längsschnitt abgebildete zweite Ausführungsform der erfindungsgemäßen Ventileinheit 1.2 unterscheidet sich bei prinzipiell gleichem Aufbau und gleicher Funktionsweise von der ersten Ausführungsform der Ventileinheit 1.1 gemäß Fig. 1 durch eine andere Formgebung der beiden Membranen 17.2, 18.2 und der Rohrdüsen 41, 42 der Membranventile 6.2, 7.2.

Wie besonders gut in dem in Fig. 2a vergrößert abgebildeten Ausschnitt C aus Fig. 2 erkennbar ist, weisen die Rohrdüsen 41, 42, über welche die Steuerdruckleitungen 29, 30 in die Steuerkammer 27.2, 28.2 des jeweiligen Membranventils 6.2, 7.2 einmünden, nun jeweils einen geringeren Außendurchmesser und einen als ebene Ringfläche 45, 46 ausgebildeten Außenrand 43, 44 auf, der nicht durch Ausnehmungen unterbrochen ist. Zur Wirkverstärkung der Düse-Prallplatte-Einheit weisen die beiden Membranen 17.2, 18.2 nun jeweils einen in die zugeordnete Steuerkammer 27.2, 28.2 axial hineinragenden zylindrischen Ringsteg 47, 48 auf, dessen Innendurchmesser größer als der Außendurchmesser der betreffenden Rohrdüse 41, 42 ist, und deren axialer Außenrand 49, 50 bei geschlossener Membran 17.2, 18.2 den axialen Außenrand 43, 44 der betreffenden Rohrdüse 41, 42 axial in Richtung zu der Innenwand 53, 54 der jeweiligen Steuerkammer 27.2, 28.2 überragt. Bei beiden Membranventilen 6.2, 7.2 ragt der Ringsteg 47, 48 der Membran 17.2, 18.2 vorliegend jeweils so weit in die Steuerkammer 27.2, 28.2 hinein, dass die axial gegenüberliegende Innenwand 53, 54 der Steuerkammer 27.2, 28.2 im Zusammenwirken mit dem axialen Außenrand 49, 50 des Ringsteges 47, 48 beim Öffnen des Membranventils 6.2, 7.2 als Anschlagfläche für die jeweilige Membran 17.2, 18.2 wirksam ist. Zur Reduzierung der Flächenpressung beim Anliegen an der Innenwand 55, 56 der Steuerkammer 27.2, 28.2 ist der axiale Außenrand 49, 50 des Ringsteges 47, 48 jeweils als eine ebene Ringfläche 51, 52 ausgebildet.

Durch die in Fig. 2b abgebildete ausschnittweise Axialansicht mit Blickrichtung D gemäß Fig. 2a soll verdeutlicht werden, dass der axiale Außenrand 49, 50 des Ringsteges 47, 48 zur Vermeidung eines Festsaugens der Membran 17.2, 18.2 an der Innenwand 55, 56 der betreffenden Steuerkammer 27.2, 28.2 jeweils mit einer Ausnehmung 53, 54 versehen ist, die vorliegend als eine im Querschnitt halbrunde Diagonalnut ausgebildet ist.

### Bezugszeichenliste (Bestandteil der Beschreibung)

- 1.1: Ventileinheit (erste Ausführungsform)
- 1.2: Ventileinheit (zweite Ausführungsform)
- 2: Ventilgehäuse
- 3: Bremsdruckeingang
- 4: Bremsdruckausgang
- 5: Entlüftungsausgang
- 6.1, 6.2: Einlassventil, Membranventil
- 7.1, 7.2: Auslassventil, Membranventil
- 8: Vorsteuerventil von Einlassventil 6.1, 6.2, Magnetventil
- 9: Vorsteuerventil von Auslassventil 7.1, 7.2, Magnetventil
- 10: Teilungsebene
- 11: Basisgehäuse
- 12: Gehäusedeckel
- 13: Steuereinheit
- 14.1: Zwischenplatte
- 14.2: Zwischenplatte
- 15: Betätigungsachse von Einlassventil 6.1, 6.2
- 16: Betätigungsachse von Auslassventil 7.1, 7.2
- 17.1: Membran von Einlassventil 6.1
- 17.2: Membran von Einlassventil 6.2
- 18.1: Membran von Auslassventil 7.1
- 18.2: Membran von Auslassventil 7.2
- 19: Längsrichtung
- 20: Zentralkanal von Einlassventil 6.1, 6.2
- 21: Zentralkanal von Auslassventil 7.1, 7.2
- 22: Ventilsitz von Einlassventil 6.1, 6.2
- 23: Ventilsitz von Auslassventil 7.1, 7.2
- 24: Ringkanal von Einlassventil 6.1, 6.2
- 25: Ringkanal von Auslassventil 7.1, 7.2
- 26: Verbindungskanal
- 27.1: Steuerkammer von Einlassventil 6.1
- 27.2: Steuerkammer von Einlassventil 6.2
- 28.1: Steuerkammer von Auslassventil 7.1
- 28.2: Steuerkammer von Auslassventil 7.2
- 29: Steuerdruckleitung von Einlassventil 6.1, 6.2
- 30: Steuerdruckleitung von Auslassventil 7.1, 7.2
- 31: Steuerdruckleitung von Vorsteuerventil 8, 9
- 32: Steuerdruckleitung von Vorsteuerventil 8, 9
- 33: Rohrdüse
- 34: Rohrdüse
- 35: Außenrand von Rohrdüse 33
- 36: Außenrand von Rohrdüse 34
- 37: Ringfläche von Rohrdüse 33
- 38: Ringfläche von Rohrdüse 34
- 39: Ausnehmung im Außenrand 35, 37
- 40: Ausnehmung von Außenrand 36, 38
- 41: Rohrdüse
- 42: Rohrdüse
- 43: Außenrand von Rohrdüse 41
- 44: Außenrand von Rohrdüse 42
- 45: Ringfläche am Außenrand 43
- 46: Ringfläche am Außenrand 44
- 47: Ringsteg von Membran 17.2
- 48: Ringsteg von Membran 18.2
- 49: Außenrand des Ringstegs 47
- 50: Außenrand des Ringstegs 48
- 51: Ringfläche des Ringstegs 47
- 52: Ringfläche des Ringstegs 48
- 53: Ausnehmung am Außenrand 49, 51
- 54: Ausnehmung am Außenrand 50, 52
- 55: Innenwand von Steuerkammer 27.2
- 56: Innenwand von Steuerkammer 28.2
- A: Ausschnitt
- B: Blickrichtung
- C: Ausschnitt
- D: Blickrichtung

## Patentansprüche

1. Ventileinheit zur Druckmodulation in einer Druckluft-Bremsanlage, mit einem Einlassventil (6.1; 6.2) und einem Auslassventil (7.1; 7.2), die als Membranventile ausgebildet sind, und über die ein Bremsdruckausgang (4) mit einem Bremsdruckeingang (3) oder einem Entlüftungsausgang (5) verbindbar oder gegenüber diesem absperrbar ist, und mit zwei als 3/2-Wege-Magnetventile ausgebildeten Vorsteuerventilen (8, 9), über die jeweils eine an die Membran (17.1, 18.1; 17.2, 18.2) des zugeordneten Membranventils (6.1, 7.1; 6.2, 7.2) angrenzende Steuerkammer (27.1, 28.1; 27.2, 28.2) über eine Steuerdruckleitung (29, 30) mit einem Steuerdruck beaufschlagbar ist, wobei die Membranventile (6.1, 7.1; 6.2, 7.2) mit parallelen Betätigungsachsen (15, 16) radial benachbart in einem Ventilgehäuse (2) angeordnet sind, und die Membranen (17.1, 18.1; 17.2, 18.2) der Membranventile (6.1, 7.1; 6.2, 7.2) zwischen zwei Gehäuseteilen (11, 12) eingespannt sind, wobei das Einlassventil (6.1; 6.2) und/oder das Auslassventil (7.1; 7.2) jeweils als ein federloses Membranventil ausgebildet ist, und dass die zugeordnete Steuerdruckleitung (29, 30) jeweils mittig und axial ausgerichtet in die Steuerkammer (27.1, 28.1; 27.2, 28.2) des betreffenden Membranventils (6.1, 7.1; 6.2, 7.2) einmündet, **dadurch gekennzeichnet, dass** die Steuerdruckleitung (29, 30) zur Bildung einer Düse-Prallplatte-Einheit über eine in die Steuerkammer (27.1, 28.1; 27.2, 28.2) des Membranventils (6.1, 7.1; 6.2, 7.2) axial hineinragende Rohrdüse (33, 34; 41, 42) endet.

2. Ventileinheit nach Anspruch 1, **dadurch gekennzeichnet, dass** die Rohrdüse (33, 34) der Steuerdruckleitung (29, 30) so weit in die Steuerkammer (27.1, 28.1) des Membranventils (6.1, 7.1) hineinragt, dass deren Außenrand (35, 36) beim Öffnen des Membranventils (6.1, 7.1) als Anschlag für die Membran (17.1, 18.1) wirksam ist.

3. Ventileinheit nach Anspruch 2, **dadurch gekennzeichnet, dass** der Außenrand (35, 36) der Rohrdüse (33, 34) zur Reduzierung der Flächenpressung der Membran (17.1, 18.1) beim Anliegen am Außenrand (35, 36) der Rohrdüse (33, 34) als eine ebene Ringfläche (37, 38) ausgebildet ist.

4. Ventileinheit nach Anspruch 2 oder 3, **dadurch gekennzeichnet, dass** der Außenrand (35, 36) der Rohrdüse (33, 34) zur Vermeidung eines Festsaugens der Membran (17.1, 18.1) mit mindestens einer Ausnehmung (39, 40) versehen ist.

5. Ventileinheit nach Anspruch 4, **dadurch gekennzeichnet, dass** die Ausnehmung (39, 40) in dem Außenrand (35, 36) der Rohrdüse (33, 34) als eine im Querschnitt halbrunde Diagonalnut ausgebildet ist.

6. Ventileinheit nach einem der Ansprüche 1 bis 5, **dadurch gekennzeichnet, dass** die Membran (17.2, 18.2) zur Wirkverstärkung der Düse-Prallplatte-Einheit einen in die Steuerkammer (27.2, 28.2) axial hineinragenden zylindrischen Ringsteg (47, 48) aufweist, dessen Innendurchmesser größer als der Außendurchmesser der Rohrdüse (41, 42) der Steuerdruckleitung (29, 30) ist.

7. Ventileinheit nach Anspruch 5, **dadurch gekennzeichnet, dass** der Außenrand (49, 50) des Ringsteges (47, 48) bei geschlossener Membran (17.2, 18.2) den Außenrand (43, 44) der Rohrdüse (41, 42) axial in Richtung zu der Innenwand (55, 56) der Steuerkammer (27.2, 28.2) überragt.

8. Ventileinheit nach Anspruch 6 oder 7, **dadurch gekennzeichnet, dass** der Ringsteg (47, 48) der Membran (17.2, 18.2) so weit in die Steuerkammer (27.2, 28.2) hineinragt, dass die axial gegenüberliegende Innenwand (55, 56) der Steuerkammer (27.2, 28.2) im Zusammenwirken mit dem Außenrand (49, 50) des Ringsteges (47.48) beim Öffnen des Membranventils (6.2, 7.2) als Anschlagfläche für die Membran (17.2, 18.2) wirksam ist.

9. Ventileinheit nach Anspruch 8, **dadurch gekennzeichnet, dass** der Außenrand (49, 50) des Ringsteges (47, 48) zur Reduzierung der Flächenpressung beim Anliegen an der Innenwand (55, 56) der Steuerkammer (27.2, 28.2) als eine ebene Ringfläche (51, 52) ausgebildet ist.

10. Ventileinheit nach Anspruch 8 oder 9, **dadurch gekennzeichnet, dass** der Außenrand (49, 50) des Ringsteges (47, 48) zur Vermeidung eines Festsaugens der Membran (17.2, 18.2) an der Innenwand (55, 56) der Steuerkammer (27.2, 28.2) mit mindestens einer Ausnehmung (53, 54) versehen ist.

11. Ventileinheit nach Anspruch 10, **dadurch gekennzeichnet, dass** die Ausnehmung (53, 54) in dem Außenrand (49, 50) des Ringsteges (47, 48) als eine im Querschnitt halbrunde Diagonalnut ausgebildet ist.

## Claims

1. Valve unit for modulating the pressure in a pneumatic brake system, comprising an inlet valve (6.1; 6.2) and an outlet valve (7.1; 7.2), which are designed as diaphragm valves and via which a brake pressure outlet (4) can be connected to a brake pressure inlet (3) or a vent outlet (5) or can be shut off relative thereto, and comprising two pilot valves (8, 9), which are designed as 3/2-way solenoid valves and via each of which a control chamber (27.1, 28.1; 27.2, 28.2) adjoining the diaphragm (17.1, 18.1; 17.2, 18.2) of the associated diaphragm valve (6.1, 7.1; 6.2, 7.2) can be supplied with a control pressure via a control pressure line (29, 30), wherein the diaphragm valves (6.1, 7.1; 6.2, 7.2) are arranged with parallel actuation axes (15, 16) radially adjacently in a valve housing (2), and the diaphragms (17.1, 18.1; 17.2, 18.2) of the diaphragm valves (6.1, 7.1; 6.2, 7.2) are clamped between two housing parts (11, 12), wherein the inlet valve (6.1; 6.2) and/or the outlet valve (7.1; 7.2) is designed in each case as a springless diaphragm valve, and in that the associated control pressure line (29, 30) opens in each case centrally and in an axially oriented manner into the control chamber (27.1, 28.1; 27.2, 28.2) of the relevant diaphragm valve (6.1, 7.1; 6.2, 7.2), **characterized in that** the control pressure line (29, 30) ends in a tubular nozzle (33, 34; 41, 42) projecting axially into the control chamber (27.1, 28.1; 27.2, 28.2) of the diaphragm valve (6.1, 7.1; 6.2, 7.2) in order to form a nozzle/baffle plate unit.

2. Valve unit according to claim 1, **characterized in that** the tubular nozzle (33, 34) of the control pressure line (29, 30) projects so far into the control chamber (27.1, 28.1) of the diaphragm valve (6.1, 7.1) that the outer edge (35, 36) of said line acts as a stop for the diaphragm (17.1, 18.1) when the diaphragm valve (6.1, 7.1) is opened.

3. Valve unit according to claim 2, **characterized in that** the outer edge (35, 36) of the tubular nozzle (33, 34) is designed as a flat annular surface (37, 38) in order to reduce the surface pressure on the diaphragm (17.1, 18.1) when bearing against the outer edge (35, 36) of the tubular nozzle (33, 34).

4. Valve unit according to claim 2 or 3, **characterized in that** the outer edge (35, 36) of the tubular nozzle (33, 34) is provided with at least one recess (39, 40) in order to prevent the diaphragm (17.1, 18.1) from adhering.

5. Valve unit according to claim 4, **characterized in that** the recess (39, 40) in the outer edge (35, 36) of the tubular nozzle (33, 34) is designed as a diagonal groove of semicircular cross-section.

6. Valve unit according to any one of claims 1 to 5, **characterized in that**, in order to enhance the effect of the nozzle/baffle plate unit, the diaphragm (17.2, 18.2) has a cylindrical annular web (47, 48) that projects axially into the control chamber (27.2, 28.2), the internal diameter of said annular web being larger than the external diameter of the tubular nozzle (41, 42) of the control pressure line (29, 30).

7. Valve unit according to claim 5, **characterized in that**, when the diaphragm (17.2, 18.2) is closed, the outer edge (49, 50) of the annular web (47, 48) projects axially beyond the outer edge (43, 44) of the tubular nozzle (41, 42) in the direction toward the inner wall (55, 56) of the control chamber (27.2, 28.2).

8. Valve unit according to claim 6 or 7, **characterized in that** the annular web (47, 48) of the diaphragm (17.2, 18.2) projects so far into the control chamber (27.2, 28.2) that the axially opposite inner wall (55, 56) of the control chamber (27.2, 28.2) in collaboration with the outer edge (49, 50) of the annular web (47, 48) acts as a stop surface for the diaphragm (17.2, 18.2) when the diaphragm valve (6.2, 7.2) is opened.

9. Valve unit according to claim 8, **characterized in that** the outer edge (49, 50) of the annular web (47, 48) is designed as a flat annular surface (51, 52) in order to reduce the surface pressure when bearing against the inner wall (55, 56) of the control chamber (27.2, 28.2).

10. Valve unit according to claim 8 or 9, **characterized in that** the outer edge (49, 50) of the annular web (47, 48) is provided with at least one recess (53, 54) in order to prevent the diaphragm (17.2, 18.2) from adhering to the inner wall (55, 56) of the control chamber (27.2, 28.2).

11. Valve unit according to claim 10, **characterized in that** the recess (53, 54) in the outer edge (49, 50) of the annular web (47, 48) is designed as a diagonal groove of semicircular cross-section.

## Revendications

1. Unité soupape pour la modulation de pression dans un système de freinage à air comprimé, avec une soupape d'entrée (6.1 ; 6.2) et une soupape de sortie (7.1 ; 7.2), qui sont réalisées sous la forme de soupapes à membrane, et par l'intermédiaire de laquelle une sortie de pression de freinage (4) peut être reliée à une entrée de pression de freinage (3) ou une sortie d'aération (5) ou peut être obturée par rapport à celle-ci, et avec deux soupapes pilotes (8, 9) réalisées sous la forme d'électrovannes à 3/2 voies, par l'intermédiaire desquelles respectivement une chambre de commande (27.1, 28.1 ; 27.2, 28.2) adjacente à la membrane (17.1, 18.1 ; 17.2, 18.2) de la soupape à membrane (6.1, 7.1 ; 6.2, 7.2) associée peut être sollicitée avec une pression de commande par l'intermédiaire d'une conduite de pression de commande (29, 30), dans laquelle les soupapes à membrane (6.1, 7.1 ; 6.2, 7.2) sont disposées avec des axes d'actionnement (15, 16) parallèles de manière radialement voisine dans un carter de soupape (2), et les membranes (17.1, 18.1 ; 17.2, 18.2) des soupapes à membrane (6.1, 7.1 ; 6.2, 7.2) sont serrées entre deux parties de carter (11, 12), dans laquelle la soupape d'entrée (6.1 ; 6.2) et/ou la soupape de sortie (7.1 ; 7.2) est réalisée respectivement sous la forme d'une soupape à membrane sans ressort, et que la conduite de pression de commande (29, 30) associée débouche respectivement au centre et de manière orientée axialement dans la chambre de commande (27.1, 28.1 ; 27.2, 28.2) de la soupape à membrane (6.1, 7.1 ; 6.2, 7.2) concernée,
**caractérisée en ce que** la conduite de pression de commande (29, 30) pour la formation d'une unité buse-plaque déflectrice termine au-dessus d'une buse tubulaire (33, 34 ; 41, 42) faisant saillie axialement dans la chambre de commande (27.1, 28.1 ; 27.2, 28.2) de la soupape à membrane (6.1, 7.1 ; 6.2, 7.2).

2. Unité soupape selon la revendication 1, **caractérisée en ce que** la buse tubulaire (33, 34) de la conduite de pression de commande (29, 30) fait saillie dans la chambre de commande (27.1, 28.1) de la soupape à membrane (6.1, 7.1) si loin que son bord extérieur (35, 36) agit comme butée pour la membrane (17.1, 18.1) lors de l'ouverture de la soupape à membrane (6.1, 7.1).

3. Unité soupape selon la revendication 2, **caractérisée en ce que** le bord extérieur (35, 36) de la buse tubulaire (33, 34) pour la réduction de la pression superficielle de la membrane (17.1, 18.1) lors de l'application contre le bord extérieur (35, 36) de la buse tubulaire (33, 34) est réalisé sous la forme d'une surface annulaire plate (37, 38).

4. Unité soupape selon la revendication 2 ou 3, **caractérisée en ce que** le bord extérieur (35, 36) de la buse tubulaire (33, 34) pour éviter une aspiration profonde de la membrane (17.1, 18.1) est pourvu d'au moins un évidement (39, 40) .

5. Unité soupape selon la revendication 4, **caractérisée en ce que** l'évidement (39, 40) est réalisé dans le bord extérieur (35, 36) de la buse tubulaire (33, 34) sous la forme d'une rainure diagonale semi-circulaire en coupe transversale.

6. Unité soupape selon l'une quelconque des revendications 1 à 5, **caractérisée en ce que** la membrane (17.2, 18.2) pour renforcer l'action de l'unité buse-plaque déflectrice présente une nervure annulaire (47, 48) cylindrique faisant saillie axialement dans la chambre de commande (27.2, 28.2), dont le diamètre intérieur est supérieur au diamètre extérieur de la buse tubulaire (41, 42) de la conduite de pression de commande (29, 30).

7. Unité soupape selon la revendication 5, **caractérisée en ce que** le bord extérieur (49, 50) de la nervure annulaire (47, 48) lorsque la membrane (17.2, 18.2) est fermée fait saillie du bord extérieur (43, 44) de la buse tubulaire (41, 42) axialement en direction de la paroi intérieure (55, 56) de la chambre de commande (27.2, 28.2).

8. Unité soupape selon la revendication 6 ou 7, **caractérisée en ce que** la nervure annulaire (47, 48) de la membrane (17.2, 18.2) fait saillie dans la chambre de commande (27.2, 28.2) si loin que la paroi intérieure (55, 56) axialement opposée de la chambre de commande (27.2, 28.2) en coopération avec le bord extérieur (49, 50) de la nervure annulaire (47, 48) lors de l'ouverture de la soupape à membrane (6.2, 7.2) agit comme surface de butée pour la membrane (17.2, 18.2).

9. Unité soupape selon la revendication 8, **caractérisée en ce que** le bord extérieur (49, 50) de la nervure annulaire (47, 48) pour la réduction de la pression superficielle lors de l'application contre la paroi intérieure (55, 56) de la chambre de commande (27.2, 28.2) est réalisé sous la forme d'une surface annulaire plate (51, 52).

10. Unité soupape selon la revendication 8 ou 9, **caractérisée en ce que** le bord extérieur (49, 50) de la nervure annulaire (47, 48) pour éviter une aspiration profonde de la membrane (17.2, 18.2) sur la paroi intérieure (55, 56) de la chambre de commande (27.2, 28.2) est pourvu d'au moins un évidement (53, 54).

11. Unité soupape selon la revendication 10, **caractérisée en ce que** l'évidement (53, 54) dans le bord extérieur (49, 50) de la nervure annulaire (47, 48) est réalisé sous la forme d'une rainure diagonale semi-circulaire en coupe transversale.
